Europäisches Patentamt

(19) European Patent Office

Office européen des brevets

(11) Numéro de publication : **0 082 795**
**B1**

---

(12) **FASCICULE DE BREVET EUROPÉEN**

---

(45) Date de publication du fascicule du brevet :
**07.05.86**

(21) Numéro de dépôt : **82430039.6**

(22) Date de dépôt : **16.12.82**

(51) Int. Cl.⁴ : **A 01 G   9/22**

---

(54) **Dispositif pour déployer et replier dans une serre un ou plusieurs écrans thermiques.**

---

(30) Priorité : **18.12.81 FR 8124035**
**22.02.82 FR 8202990**
**13.07.82 FR 8212430**

(43) Date de publication de la demande :
**29.06.83 Bulletin 83/26**

(45) Mention de la délivrance du brevet :
**07.05.86 Bulletin 86/19**

(84) Etats contractants désignés :
**AT BE CH DE FR GB IT LI LU NL SE**

(56) Documents cités :
**DE-A- 3 013 717**
**FR-A- 2 067 597**

(73) Titulaire : **Dalle, Yves**
**Trémollier Les Granettes**
**F-13100 Aix-en-Provence (FR)**

(72) Inventeur : **Dalle, Yves**
**Trémollier Les Granettes**
**F-13100 Aix-en-Provence (FR)**

(74) Mandataire : **Moretti, René et al**
**C/O Cabinet BEAU DE LOMENIE 14, rue Raphael**
**F-13008 Marseille (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un dispositif pour la mise en place et le retrait d'un ou plusieurs écrans thermiques dans une serre.

Le secteur technique de l'invention est celui des moyens pour mettre en place et enlever les écrans thermiques disposés à l'intérieur d'une serre de culture et plus particulièrement dans une serre-tunnel.

Les écrans thermiques sont couramment utilisés dans la culture sous serre pour limiter les pertes thermiques par rayonnement à travers les parois.

On connaît des dispositifs pour déployer et replier mécaniquement des écrans dans une serre de culture ou pour couvrir et découvrir un bâtiment ayant la forme d'une serre-tunnel.

Un dispositif pour déployer et replier des écrans dans une serre de culture est décrit dans la demande publiée allemande DE-A-3 013 717. Un tel dispositif est disposé à l'intérieur d'une serre en forme de shed et comporte des profils d'une section droite en U courbés et fixés à des poteaux et à des traverses. Lesdits profils constituent des chemins de roulement à des galets solidaires de plusieurs écrans. Un dispositif comprenant un treuil et des câbles permet de manœuvrer les écrans, lesquels, en position déployée se rencontrent dans la partie médiane de la serre pour former un tunnel et en position effacée sont repliés dans les parties latérales de la serre entre lesdits poteaux.

Un dispositif pour couvrir et découvrir un bâtiment, en forme de serre-tunnel, est décrit dans la demande publiée française FR-A-2 398 155.

Le bâtiment est en forme de tunnel et comporte à son faîte, un axe comportant des tambours à gorge, lequel axe est entraîné en rotation par des moyens manuels ou moteurs.

Sur chaque versant du bâtiment sont disposées des pannes mobiles longitudinales, reliées entre elles par des câbles qui s'enroulent autour desdits tambours. Des bâches sont fixées auxdites pannes et peuvent ainsi être déployées pour être rejointes au faîtage du bâtiment ou être repliées en partie basse de celui-ci.

Dans l'un ou l'autre de ces dispositifs connus, la manœuve des écrans ou des bâches de couverture est effectuée à partir de moyens mécaniques comportant des câbles de traction manœuvrés par des moyens manuels ou moteurs.

Un objectif de la présente invention est la mise en œuvre d'un dispositif comportant des moyens pour déployer ou replier, au-dessus des cultures plantées sous serre, un ou plusieurs écrans thermiques en fonction des besoins pour libérer la serre et réaliser les façons culturales, ou mettre les cultures dans un climat favorable à leur bon développement.

Un autre objectif de l'invention est de favoriser le fonctionnement des écrans pendant leur déploiement et leur repliement, en vue d'annuler l'effet de collage des écrans sur leurs supports résultant de l'humidité due à la condensation dans la serre, de l'électricité statique ou de l'état de surface des supports.

Un autre objectif de l'invention est d'obtenir l'effacement maximum des écrans en position repliée afin d'éviter tout ombrage le long des pieds des arceaux de la serre, où sont rétractés les écrans.

Ces objectifs sont atteints par le dispositif pour déployer et replier dans une serre un ou plusieurs écrans thermiques, lequel dispositif se compose de plusieurs arceaux répartis à l'intérieur de la serre et destinés à guider et à supporter au moins un écran, lequel est fixé du côté de la partie inférieure des arceaux et relié à des moyens de traction pour d'une part déployer et tendre l'écran au-dessus des arceaux et d'autre part obtenir son repliement au pied de ceux-ci, caractérisé en ce qu'il comporte des manchons coulissants extensibles entourant lesdits arceaux dont les manchons sont des chambres à air fixées au pied des arceaux et comportant, à leur extrémité libre, un piston percé en son centre pour coulisser sur lesdits arceaux, auxquels pistons est fixé le bord longitudinal libre de l'écran. Les pistons comportent en outre, des moyens d'accrochage pour maintenir en fin de course l'écran déployé et sont soumis à des moyens pour ramener l'écran en position repliée. Le dispositif comporte en outre des moyens pour souffler de l'air dans lesdites chambres.

Le dispositif selon l'invention comporte encore dans le voisinage et au-dessous du piston de plusieurs manchons en position rétractée, des moyens portés par une structure et mis au contact de la périphérie interne ou externe du manchon et dont la fonction est de ralentir le déploiement du manchon lors de sa mise en pression afin d'assurer une bonne répartition de l'air dans la partie du manchon gonflé et éviter que cette partie ne s'enroule autour de l'arceau de guidage pendant le déploiement de l'écran.

Le dispositif comporte en outre à au moins un des pieds de plusieurs arceaux de guidage, un fourreau qui entoure l'arceau et au fond duquel est fixé, par une de ses extrémités, le manchon, lequel fourreau enveloppe le manchon complètement rétracté et comporte, au voisinage de son extrémité ouverte, un desdits moyens pour ralentir le déploiement du manchon.

Lesdits objectifs sont également atteints par les caractéristiques du dispositif selon l'invention énoncées dans les revendications ci-jointes.

Le résultat de l'invention est la mise en place, le retrait et le déploiement contrôlé des écrans thermiques équipant une serre lors de leur déploiement et de leur repliement total ou quasi total au pied des arceaux de guidage pour éviter tout ombrage néfaste sur les plantes cultivées notamment le matin et le soir lorsque les rayons solaires sont rasants.

Du fait que les écrans sont portés par des manchons extensibles coulissant sur les arceaux, leur mise en place et leur retrait s'effectuent dans d'excellentes conditions.

Selon l'invention où les manchons extensibles sont des chambres à air, plusieurs écrans et même plusieurs serres sont aisément actionnées à partir d'une source d'air mise en circulation au moyen d'un ou plusieurs ventilateurs à basse pression ou par tout autre moyen équivalent.

Indépendamment de ces avantages inhérents au fonctionnement pneumatique, le dispositif à air permet d'établir une circulation d'air dans le volume délimité par l'écran, ce qui peut être d'un intérêt non négligeable dans le cas de certaines cultures. Cette circulation d'air forme un coussin d'air pour porter l'écran par soufflage.

Lesdits manchons permettent d'éviter le contact des écrans et de leurs supports afin de pallier les effets de freinage des écrans pendant leur fonctionnement par adhérence sur lesdits supports due à la condensation dans la serre, à l'électricité statique ou à l'état de surface des arceaux.

Les moyens de freinage qui entourent le manchon ou qui sont disposés à l'intérieur de celui-ci et qui exercent une pression à sa périphérie interne ou externe, assurent une bonne répartition de l'air dans la partie du manchon située en aval desdits moyens et par voie de conséquence, le manchon se déploie en entraînant l'écran sans qu'il ne s'enroule autour de son arceau de guidage, comme cela se produit sur des dispositifs ne comportant pas de tels moyens.

Le mode de réalisation selon lequel le manchon est disposé dans un fourreau capable de le recevoir totalement en position rétractée, permet d'obtenir le repliement des écrans jusqu'au niveau du sol en enterrant les fourreaux jusqu'à leur embouchure, pour obtenir l'effacement total des écrans ou suivant le cas, en les enterrant partiellement pour obtenir le repliement des écrans rapprochés du sol.

Le fait que le piston du manchon obture la partie supérieure du fourreau évite toute introduction de terre dans celui-ci lors des façons culturales qui s'opèrent les écrans étant repliés.

D'autres avantages et les caractéristiques de l'invention ressortiront encore à la lecture de la description suivante de plusieurs modes d'exécution non limitatifs du dispositif selon l'invention en référence au dessin annexé sur lequel :

la figure 1 est une vue en coupe transversale d'une serre-tunnel dont les écrans sont mis en place et repliés à partir de moyens mécaniques.

la figure 2 est une vue en coupe transversale d'une serre-tunnel dont les écrans sont mis en place et sont repliés à partir de moyens pneumatiques se verrouillant au faîte de la serre ; l'alimentation en air est réalisée au moyen de deux collecteurs situés aux pieds des arceaux supports ;

la figure 3 est une vue en coupe de la serre de la figure 2 dont le verrouillage des écrans s'effectue en un point quelconque, les pistons venant en opposition et coopérant à cette fin ;

la figure 4 est une vue en coupe d'une serre-tunnel dont les écrans sont mis en place et repliés à partir de moyens pneumatiques et dont les supports des écrans sont des tubes pour permettre une distribution de l'air du côté des pieds desdits supports ; l'alimentation en air est réalisée au moyen d'un collecteur situé sous le faîte de la serre ; les écrans se verrouillent sur ledit collecteur ;

la figure 5 est une vue en coupe partielle d'une serre-tunnel dont les écrans sont mis en place et repliés à partir de moyens pneumatiques comprenant des manchons à soufflet ;

la figure 6 est une vue en coupe partielle d'une serre-tunnel dont les écrans sont mis en place et repliés au moyen d'un dispositif pneumatique comportant deux manchons dont un de plus petite section comporte une armature et est engagé dans l'autre de plus forte section ; au moment du déploiement de l'écran, la pression de l'air agit sur toute la surface du piston, l'air étant insufflé dans les deux manchons ; lors du repliement, la dépression est seulement active dans le manchon central ;

la figure 7 est une vue en coupe partielle d'une serre-tunnel dont les écrans sont mis en place et repliés au moyen d'un dispositif semblable à celui de la figure 6 ; selon cet exemple, le manchon intérieur comporte des soufflets ;

la figure 8 est une vue en coupe d'une serre illustrant un dispositif selon l'invention comportant un fourreau dans lequel est monté un manchon ;

la figure 9 est une vue en coupe à plus grande échelle d'un fourreau dans lequel est rétracté un manchon. Sur cette figure, le piston est représenté en position sortie. Les moyens pour ralentir le déploiement du manchon et assurer une répartition correcte de l'air insufflé dans celui-ci se composent d'une membrane déformable constituant, en combinaison avec la partie supérieure du fourreau, une poche d'air annulaire qui entoure le manchon ;

la figure 10 est une vue en coupe partielle d'un fourreau similaire à celui de la figure 2. Sur cette figure, le piston obture la partie supérieure du fourreau. Les moyens pour ralentir le déploiement du manchon et assurer une bonne répartition de l'air dans celui-ci sont constitués par un élément tubulaire cylindrique en mousse synthétique ou composé de fibres souples implantées à la manière d'une brosse ;

la figure 11 est une vue de dessus de l'un quelconque des fourreaux des figures 9 et 10 ;

la figure 12 est une vue en coupe d'un fourreau dans lequel est partiellement rétracté un manchon. Le piston est agencé pour obturer, à la façon d'un couvercle, l'embouchure du fourreau. Les moyens pour ralentir le déploiement du manchon et assurer une bonne répartition de l'air dans celui-ci se composent d'une membrane déformable en forme de poche disposée à l'intérieur du manchon et alimentée en air par une tubulure sensiblement coaxiale au manchon. En se déformant, sous la pression de l'air, la poche s'appuie sur la périphérie interne du manchon et ralentit son déploiement ;

la figure 13 illustre le fourreau de la figure 12 dont la poche est alimentée par une tubulure séparée.

la figure 14 est une vue en coupe d'un fourreau dans lequel est partiellement rétracté un manchon, semblable à celui illustré aux figures 12 et 13. Les moyens pour ralentir le déploiement du manchon et assurer une bonne répartition de l'air dans celui-ci sont constitués par une poche en forme de manche, fixée par son extrémité inférieure dans le fond du fourreau et comportant à son autre extrémité un disque comportant des perforations pour créer des fuites d'air, lequel est situé à proximité du piston lorsque le manchon est totalement rétracté. L'air admis par des orifices réservés dans le tube central est d'abord introduit dans la poche en forme de manche et ensuite dans le manchon pour provoquer, à la fois la déformation de la poche d'air en forme de manche, et le déploiement du manchon. Le repliement du manchon est réalisé par dépression, l'air passant par lesdits orifices. L'équipement en écrans thermiques des serres, notamment des serres-tunnels, implique l'installation d'un ou plusieurs écrans, plus particulièrement pour les serres de grandes dimensions, par exemple celles dont la longueur est de l'ordre de trente à soixante mètres.

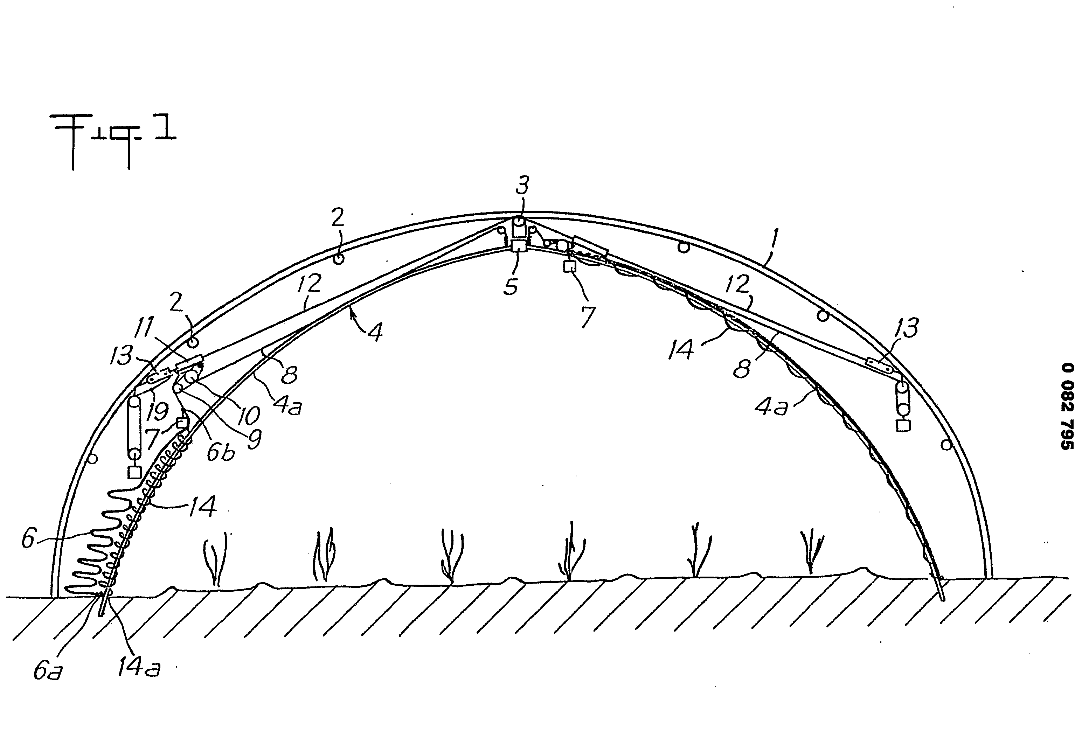

On se reporte d'abord à la figure 1 du dessin qui illustre schématiquement une serre en coupe transversale. Celle-ci se compose d'une structure composée de cintres 1, répartis sur sa longueur et reliés entre eux par des longerons latéraux 2 et un longeron 3 fixé au faîte de la serre. La couverture de la serre, réalisée par exemple en matière plastique translucide est fixée à ladite structure.

Selon un mode de réalisation, le dispositif comporte plusieurs arceaux 4, répartis à l'intérieur de la serre et s'étendant dans le sens transversal. Chaque arceau se compose, de préférence, de deux tiges cintrées 4a, fixées à une ferrure 5, elle-même fixée au longeron 3. Ces arceaux 4 sont destinés à supporter les écrans 6. Ceux-ci réalisés par exemple à partir d'un film de polyester métallisé et traité infrarouge sur une ou deux faces, sont destinés à être tendus au-dessus des plantes en étant supportés par les arceaux 4, tel qu'illustré à droite de la figure 1, ou à être repliés au pied des arceaux 4 et entre ceux-ci et le pied des cintres 1 de la serre, tel que représenté à gauche de ladite figure. Les écrans 6 se présentent sous la forme de feuilles rectangulaires dont le bord longitudinal inférieur 6a est fixé au pied de la serre.

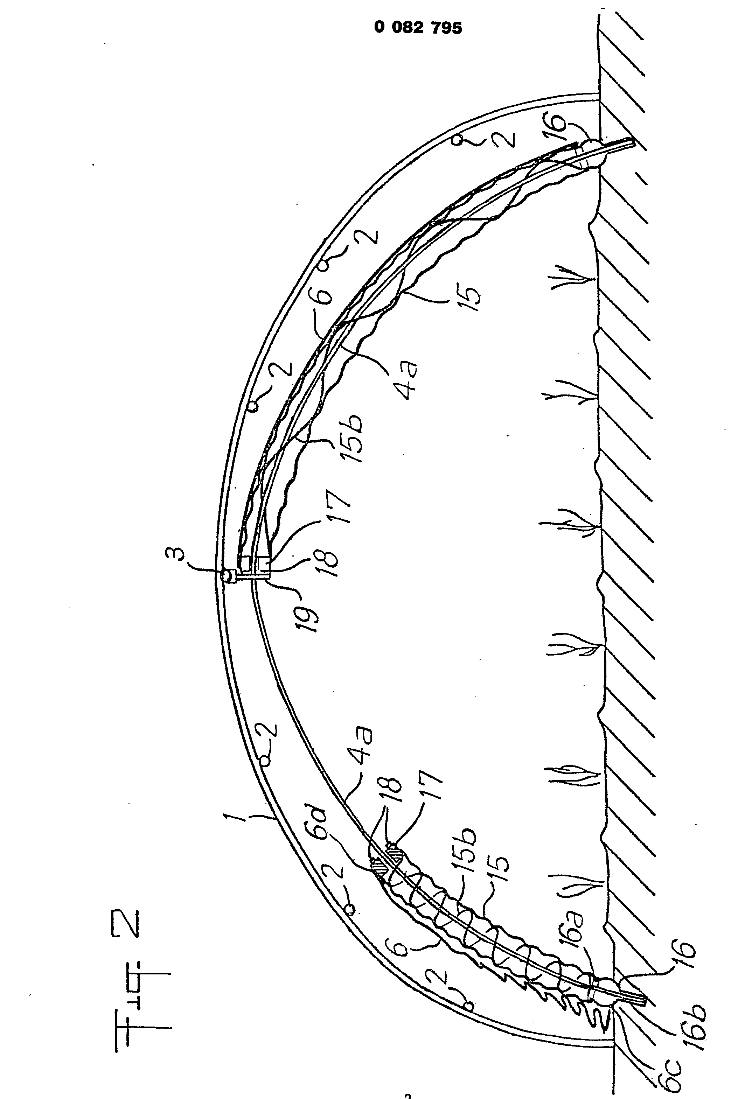

Dans le but d'empêcher l'écran 6 d'adhérer à son support sous l'effet de l'humidité due à la condensation dans la serre, de l'électricité statique ou de l'état de surface du support, le dispositif comporte (figure 2) des manchons extensibles constitués par des chambres à air fixées à un collecteur d'air 16, disposé au pied des tiges de guidage 4a. Le collecteur 16 comporte des piquages 16a formant des cols autour desquels sont emmanchés les manchons 15 par leur extrémité inférieure, la fixation étant réalisée au moyen de colliers de serrage.

Par exemple et tel que représenté sur le dessin, les tiges 4a traversent transversalement les collecteurs 16 et sont engagées dans le logement 16b s'étendant à la partie inférieure des collecteurs et fichés dans la terre.

A leur extrémité libre, les manchons 15 comportent un piston 17, percé en son centre pour coulisser le long de la tige-guide 4a. Le manchon 15 est emmanché autour du piston 17 dont le contour extérieur peut adopter toutes formes, mais est de préférence d'un contour circulaire. L'écran 6 est fixé d'une part au pied des arceaux de la serre, par exemple au collecteur 16, en 6c, et d'autre part aux pistons 17 en 6d. Deux ou plusieurs manchons peuvent être nécessaires pour un bon fonctionnement des écrans.

Le maintien en position déployée des écrans 6 est, par exemple obtenu au moyen d'aimants permanents 18 coopérant avec des parties métalliques ayant des propriétés magnétiques, par exemple en acier doux. Ces parties sont des plaques fixées soit à certains des pistons : ceux opposés aux pistons qui comportent les aimants permanents, soit des plaques fixées au faîte de la serre.

Le dessin illustre à la figure 2 un mode de réalisation d'un tel dispositif dont les aimants 18 sont fixés au piston 17 pour coopérer avec la plaque 19, située dans le plan médian longitudinal au faîte et à l'intérieur de la serre. On comprend que, dans une variante, le piston pourrait tout aussi bien être équipé d'une plaque métallique pour coopérer avec des aimants permanents fixés à un support.

Pour un bon fonctionnement du dispositif, les aimants sont au moins au nombre de deux et dans ce cas, diamétralement opposés et de préférence symétriquement.

L'air admis à partir d'une source d'air pulsé, par exemple un ventilateur à basse pression (non représenté) dans le collecteur 16, est introduit dans les manchons 15. La montée en pression tend à provoquer le déplacement du piston 17 le long des tiges-guides 4a, en entraînant l'écran 6. En fin de course haute, le piston arrivant au niveau de la plaque 19 est plaqué, sous l'effet des aimants 18, sur celle-ci. Dans cette position, l'écran est déployé tel qu'illustré à droite à la figure 2.

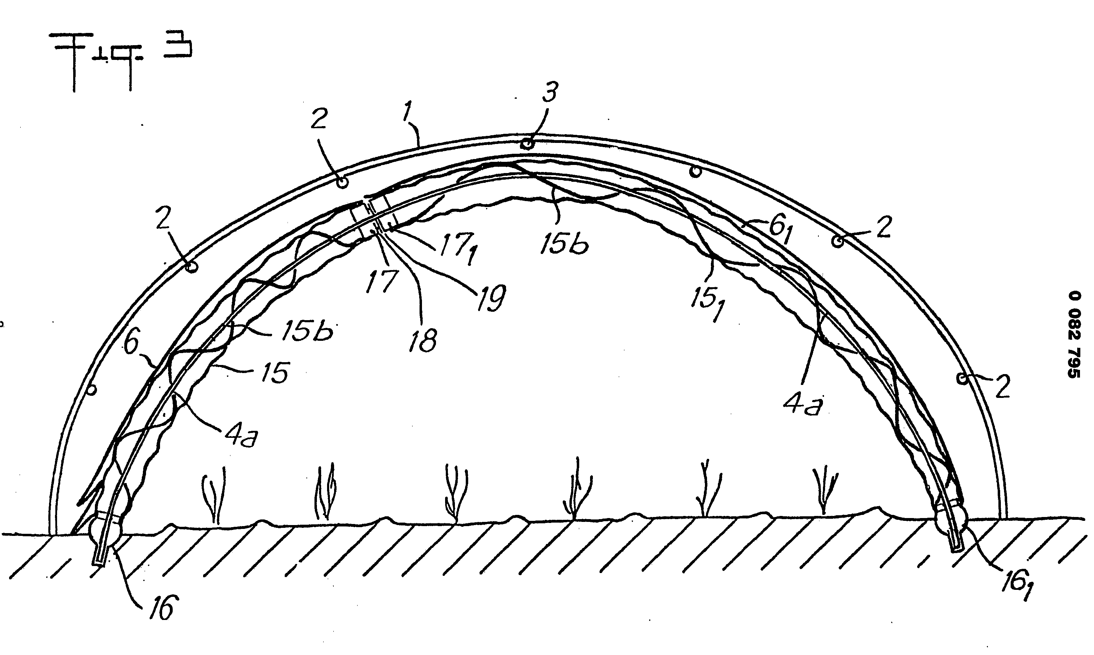

La figure 3 représente une serre-tunnel 1 dont les écrans 6 sont déployés à l'intérieur pour recouvrir totalement les cultures. Dans ce mode d'exécution le piston 17, équipant le manchon situé à gauche, comporte des aimants permanents 18, le piston $17_1$, qui équipe le manchon $15_1$, situé à droite, comporte une plaque en acier doux 19. Selon l'exemple représenté, l'écran $6_1$ est totalement déployé, ce qui a pour effet de recouvrir les cultures au-delà de l'axe longitudinal de la serre. L'écran 6 est en conséquence partiellement déployé.

Cette conception permet dans certaines conditions de masquer les cultures en tout ou partie pour former des zones d'ombre en équipant les serres d'écrans aluminisés et traités infrarouges sur les deux faces.

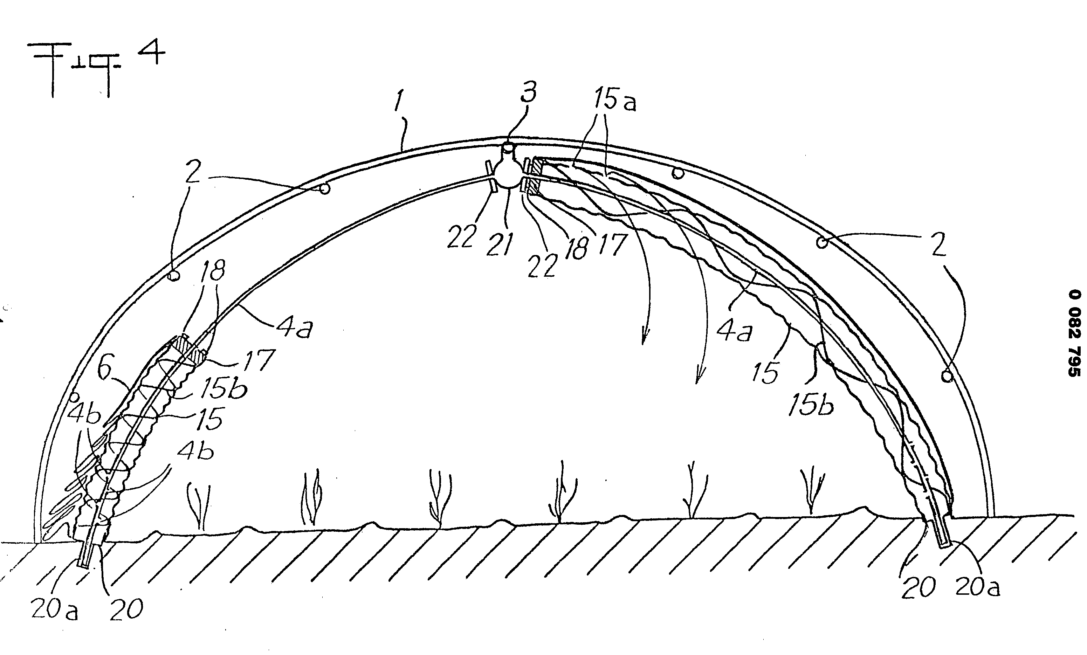

On se reporte maintenant à la figure 4 du dessin qui illustre un autre mode de réalisation du dispositif selon l'invention. Les manchons 15 sont emmanchés, par leur extrémité basse, autour de pièces d'ancrage 20 comportant, à leur partie inférieure, un logement 20a dans lequel est engagée la tige de guidage 4a. Celle-ci est un tube de petite section dont l'extrémité, située du côté de la pièce 20, comporte des perforations 4b à sa périphérie.

Comme les manchons des figures 2 et 3, ceux de la figure 4 sont fixés autour de pistons percés en leur centre pour se déplacer le long des tiges-guides 4a. L'alimentation en air est réalisée par un collecteur central 21, situé dans la serre et sous le faîte de celle-ci et dans lequel collecteur débouchent les tubes-guides 4a. Des plaques en acier doux 22, appliquées contre le collecteur ont pour fonction de recevoir, lors du déploiement des écrans 6, les pistons 17, lesquels comportent, comme ceux des figures précédentes 2 et 3, des aimants permanents 18.

L'air pulsé par un ventilateur à basse pression, ou tout autre dispositif similaire, est distribué par le réseau d'air constitué du collecteur 21 et des tubes-guides 4a pour être introduit dans les manchons 15 en passant par les orifices 4b. Sous l'effet de la montée en pression de l'air dans les manchons 15, les pistons 17 sont déplacés en entraînant les écrans 6 jusqu'à ce que les pistons viennent se coller par aimantation sur les plaques 22.

Selon une variante, représentée à droite de la figure 4, les manchons 15 comportent, du côté des pistons 17, des orifices 15a, de petite section, pour créer des fuites et atteindre deux résultats : obtenir une circulation d'air frais dans le volume délimité par l'écran, et cela dans le cadre de l'élevage de certaines plantes, et également faire porter l'écran par un coussin d'air et provoquer l'éloignement des écrans par rapport aux tiges-guides 4a ne comportant pas de manchon 15. Cette conception permet de réduire le nombre d'arceaux équipés en manchons 15. Lesdites manches à air sont d'une section droite circulaire ou ovale.

Dans un mode d'exécution, elles se présentent sous la forme de manches réalisées à partir d'un film de matière plastique, par exemple en polyester ou tout autre matériau similaire. De telles manches présentent l'avantage de présenter un faible investissement mais lors du retrait des écrans leur repliement s'effectue de façon anarchique.

Pour pallier cet inconvénient, le dispositif selon l'invention est équipé de manchons comportant une armature constituée par un ressort hélicoïdal 15b, disposé à l'intérieur ou dans l'épaisseur de leur paroi pour favoriser la rétraction des manchons et les maintenir dans une bonne position par rapport à la tige de guidage.

En variante, le dispositif selon l'invention est équipé de manchons à soufflets qui présentent l'avantage de se replier dans de bonnes conditions.

Le repliement des écrans est obtenu de préférence en créant une dépression dans les manchons sous l'effet dudit ventilateur à basse pression ou par tout autre dispositif similaire. Selon cette conception, la dépression doit être supérieure à la force d'attraction des aimants permanents pour provoquer le décollage des aimants et le retrait des écrans en vue de leur repliement au pied des arceaux. Dans le but de favoriser le fonctionnement du dispositif, les pistons 17 peuvent être lestés. Seuls les manchons 15 comportant une armature ou étant constitués par un manchon à soufflet, sont capables de résister radialement aux effets d'une dépression d'air créée dans leur volume interne. Pour les manchons simples ne comportant pas d'armature, le décollage en vue du repliement des écrans est réalisé manuellement. Pour faciliter l'opération, le dispositif peut comporter des cordonnets fixés aux pistons 17 et accessibles à partir du sol.

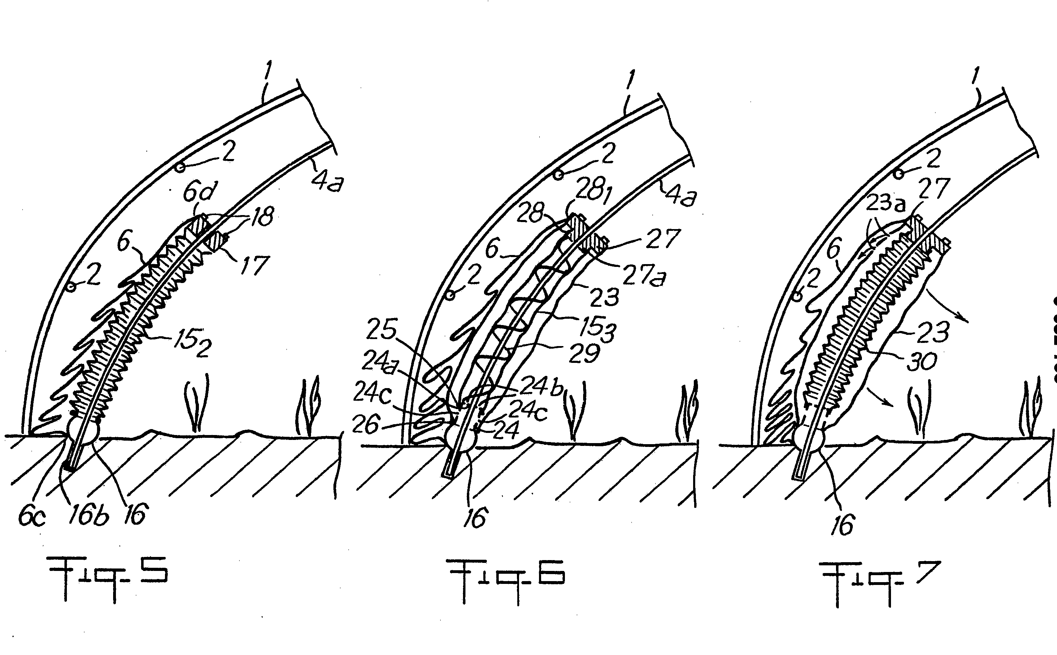

La figure 5 illustre un dispositif dont le manchon $15_2$ est à soufflet. Celui-ci est monté, comme le manchon 15, illustrée à la figure 2. Il comporte un nombre de soufflets suffisants pour qu'il puisse s'étendre le long des tiges-guides 4a. Lorsque l'écran est replié, les soufflets jointifs sont ramenés sous un faible encombrement au pied du cintre 4. Dans un mode de réalisation, de tels manchons sont fabriqués à partir d'un matériau synthétique par exemple un élastomère. Armés ou non, lesdits manchons sont capables de résister radialement à une dépression en vue de provoquer le décollage des aimants 18 lors du repliement de l'écran 6.

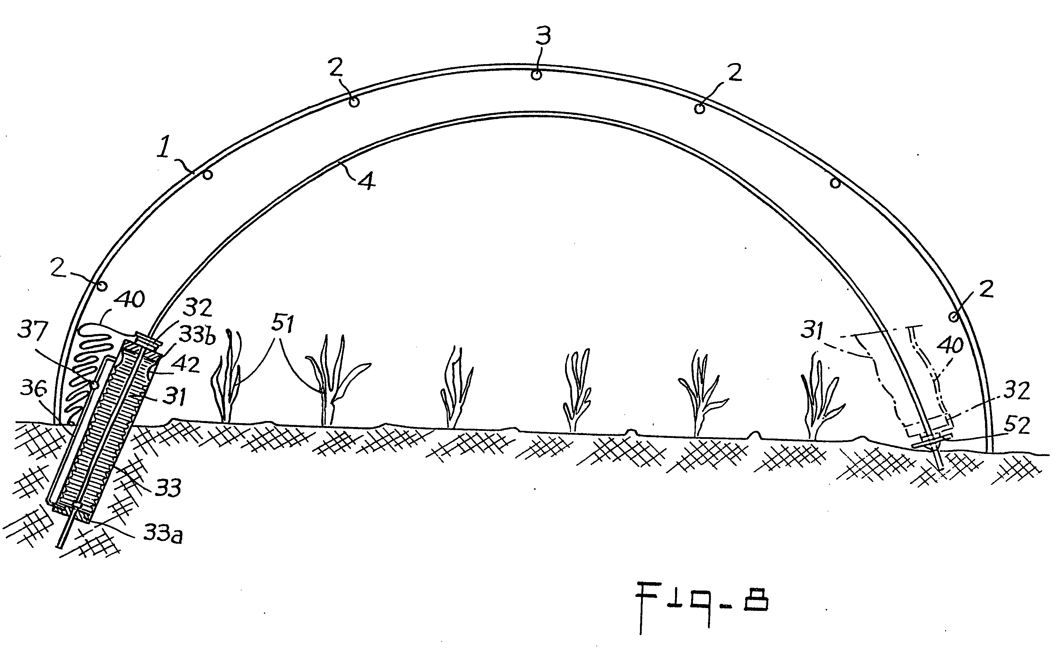

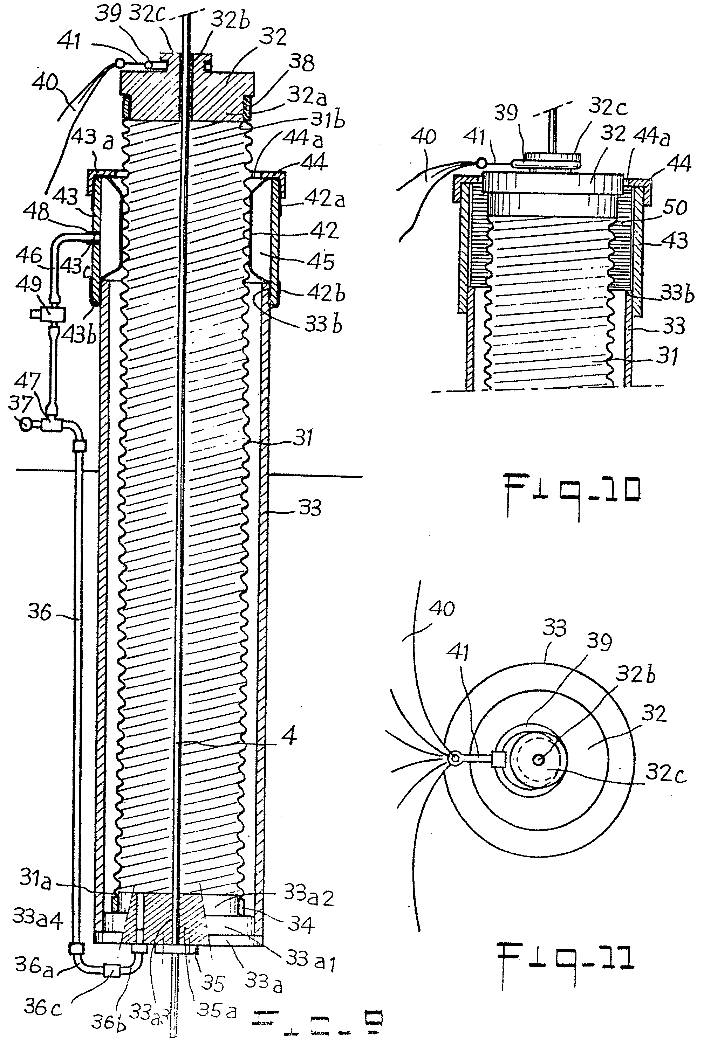

Les figures 6 et 7 illustrent un autre mode de réalisation du dispositif selon l'invention et selon deux variantes d'exécution. Tel que cela est illustré à la figure 6, le dispositif comporte, autour de certaines tiges de guidage 4a, deux manchons dont un de plus petite section $15_3$ est entouré par un autre manchon 23 de plus forte section.

Le manchon $15_3$ est emmanché au bas des tiges-guides 4a dans un piquage formant un col 24 s'étendant à la périphérie des collecteurs d'air 16. Le col 24 comporte, à son extrémité libre, une paroi 24a, percée en son centre, pour recevoir la tige-guide 4a ainsi que des trous 24b réservés autour dudit trou central. Le manchon $15_3$ est fixé à l'extrémité du col 24 au moyen d'un collier de serrage 25. Au-dessous de l'emplacement dudit collier, le col 24 comporte des trous 24c pratiqués dans sa paroi entre le collier et la naissance du col. Le manchon 23, qui est de plus forte section, est attaché au-dessous des trous 24c, au moyen d'un autre collier de serrage 26.

Le piston 27, auquel sont attachés les manchons $15_3$ et 23, comporte, à sa partie centrale, qui est percée pour permettre le passage de la tige-guide 4a, un bossage 27a autour duquel est emmanchée l'extrémité libre du manchon $15_3$, lequel est fixé au moyen d'un collier 28.

Le manchon 23 est emmanché autour du piston 27 et est fixé par un collier $28_1$.

Les manchons $15_3$ et 23 sont de section indifférente : circulaire, ovale ou autre. Ils sont toutefois, de préférence, cylindriques.

Le manchon central $15_3$ comporte, de préférence une armature constituée par un ressort hélicoïdal 29 ou tous autres équivalents techniques tels que par exemple des anneaux...

Comme les dispositifs précédemment décrits, l'écran 6 est fixé d'une part au pied de la serre et d'autre part aux pistons 27.

Pour déployer l'écran 6, l'air passant par le collecteur 16 est insufflé dans les deux manchons $15_3$/23. La surface totale du piston est intéressée. L'écran est porté par le manchon 23, lequel est réalisé à partir d'un film léger, par exemple en polyester.

Le manchon $15_3$, comme les manchons 15 décrits plus haut, comporte l'armature 29. Ce manchon est plus spécialement adapté pour replier l'écran 6. Pour ce faire, on crée dans ledit manchon $15_3$ une dépression pour ramener l'écran 6 au pied de la serre.

Le dispositif de la figure 7 est semblable à celui de la figure 6 en ce qui concerne ses éléments essentiels.

Dans cette version, le manchon central 30 est un manchon à soufflets fixé au piston 27 et au collecteur 16 de la même façon que celui décrit en référence à la figure 6. Le manchon 30 est par exemple très semblable à celui décrit à la figure 5.

En variante, le manchon 23 est perforé du côté du piston 27 pour créer des fuites d'air 23a dans le but de faire circuler l'air frais au-dessous de l'écran 6 et de porter celui-ci par soufflage.

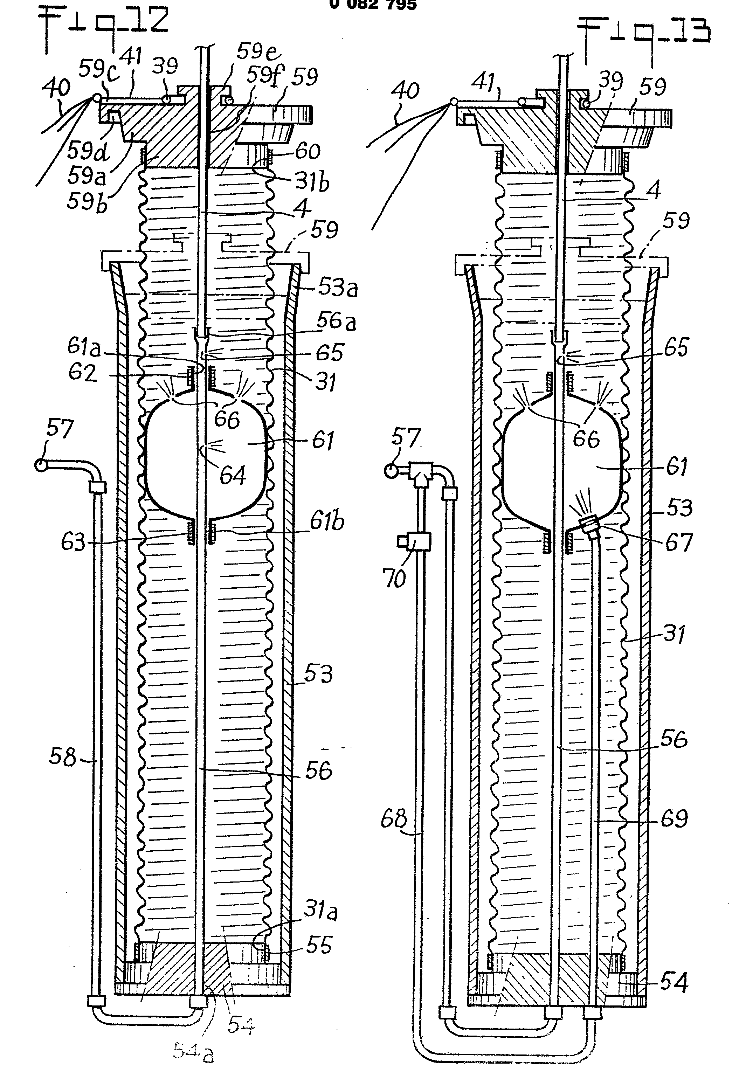

La figure 8 du dessin représente schématiquement une serre-tunnel en coupe transversale. Celle-ci se compose d'une structure comportant des cintres 1, répartis sur sa longueur et reliés les uns aux autres au moyen de longerons latéraux 2 et un longeron 3 fixé au faîte de la serre. La couverture de la serre, réalisée par exemple en matière plastique translucide, est fixée sur cette structure.

Tel que cela a déjà été exposé plus haut, le dispositif comporte plusieurs arceaux de guidage 4, répartis à l'intérieur de la serre et s'étendant dans le sens transversal. Dans un mode de réalisation, les arceaux 4 sont réalisés en une seule pièce et sont fichés dans le sol par leurs extrémités du côté des bords latéraux inférieurs de ladite structure, de telle sorte à laisser entre eux et les cintres 1, un espace destiné à recevoir les écrans en position repliée.

Les arceaux 4 assurent le guidage de manchons 31, fixés d'une part au pied des arceaux et d'autre part à un piston 32, percé en son centre pour coulisser le long desdits arceaux.

Dans un mode de réalisation, le manchon 31 est fixé à la partie inférieure et à l'intérieur d'un fourreau 33. Celui-ci est d'une forme cylindrique et comporte un fond 33a à sa partie inférieure. Sa partie supérieure est ouverte pour recevoir, en position rétractée du manchon 31, le piston 32 qui est également cylindrique.

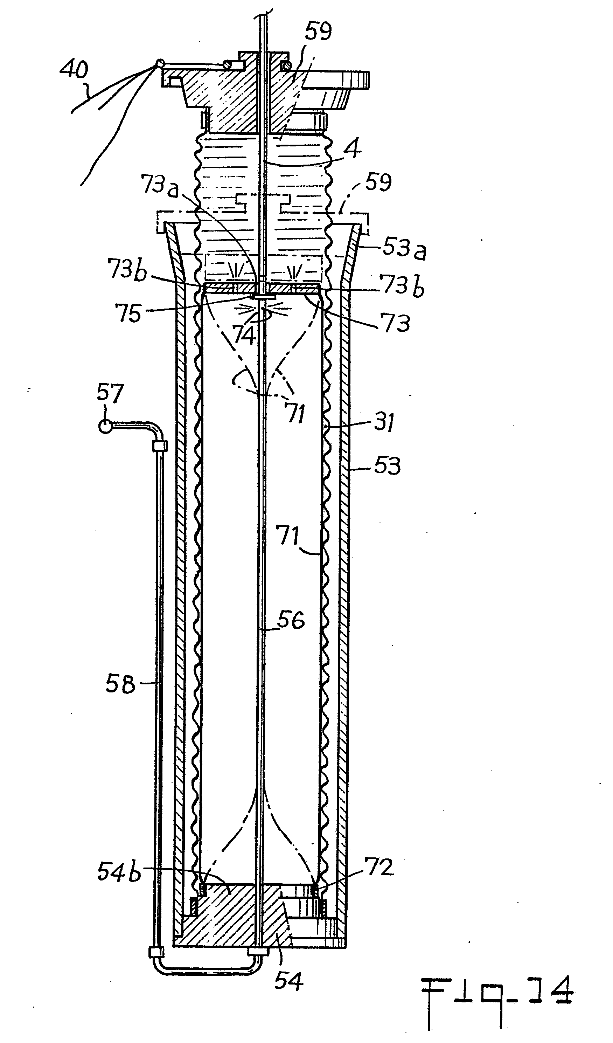

Pour une meilleure compréhension, on a représenté à plus grande échelle, à la figure 9 du dessin, un ensemble fourreau 33/manchon 31.

Dans un mode de réalisation, le fourreau 33 est réalisé en matière plastique, par exemple en P.V.C. et se compose d'un tube cylindrique comportant, à sa partie inférieure, un fond 33a. Celui-ci comporte un rétreint cylindrique $33a_1$ formant un épaulement sur lequel le tube est en appui. Ledit fond comporte un second rétreint cylindrique $33a_2$ autour duquel l'extrémité inférieure 31a du manchon 31 est engagée. La fixation du manchon est assurée par un collier de serrage 34.

Le fond 33a est percé de part en part en son centre $33a_3$ pour recevoir une des extrémités d'un arceau de guidage 4. Celui-ci s'étend à l'extérieur du fourreau et comporte une bride plate 35, fixée par soudure et s'étendant dans un plan perpendiculaire à l'arceau sur laquelle bride le fourreau est en appui. La bride 35 comporte plusieurs trous 35a, par exemple au nombre de quatre, disposés à 90° l'un de l'autre et à travers lesquels sont passées des vis de fixation (non représentées) qui sont vissées dans des taraudages réservés dans l'épaisseur du fond 33a. Celui-ci comporte également un conduit $33a_4$ le traversant de part en part et débouchant à l'intérieur du manchon 31. Ce conduit est relié à une tubulure 36 d'amenée de l'air d'alimentation du manchon 31. Cette tubulure est elle-même reliée à un collecteur d'air 37 s'étendant horizontalement sur le côté du fourreau 33. La tubulure 36 s'étend latéralement et à l'extérieur du fourreau 33 et est parallèle à celui-ci ; elle comporte, à sa partie inférieure, un coude 36a et un raccord coudé 36b, fixé au conduit $33a_4$, lesquels coudes 36a et raccords 36b sont reliés l'un à l'autre au moyen d'un manchon de raccordement 36c. Le manchon 31 peut adopter les différentes formes de réalisation décrites ci-avant. Tel que cela est illustré sur le dessin aux figures 9 et 10, il adopte par exemple la forme d'une manche à soufflets réalisée à partir d'un film en matière plastique, de préférence en polyester ou en tout autre matériau similaire et comportant une armature constituée par un ressort hélicoïdal disposé par exemple à l'intérieur du manchon. Cette conception a été adoptée de préférence pour obtenir le déploiement et la rétraction correcte du manchon. A son autre extrémité 31b, le manchon est fixé au piston 32. Celui-ci, par exemple réalisé en P.V.C. adopte, dans un mode d'exécution, la forme d'un cylindre et comporte un rétreint cylindrique 32a autour duquel l'extrémité 31b du manchon 31 est engagée. La fixation du manchon est obtenue au moyen d'un collier de serrage 38. Le piston 32 est percé de part en part en son centre pour former un conduit 32b de dimensions légèrement supérieures à celles de l'arceau 4 afin de pouvoir coulisser librement sur celui-ci. Le conduit 32b peut être d'une section droite circulaire pour coopérer avec des arceaux réalisés à partir de tubes ou de tiges cylindriques. Dans le but d'éviter toute rotation du piston 32 autour de l'arceau 4 pendant le déploiement ou la rétraction du manchon 31, l'arceau 4 est réalisé par exemple à partir d'un tube ou d'une tige de section ovale ou de toute autre section droite : carrée, rectangulaire, cruciforme ou autres... Bien entendu, le conduit 32a est réalisé dans la forme correspondante à la section droite choisie de l'arceau.

Le piston 32 comporte également à l'opposé dudit rétreint 32a, un collet 32c, dans la gorge duquel est engagé un anneau 39 auquel est fixé l'écran 40 par l'intermédiaire d'une lanière souple 41. L'anneau 39 (fig. 11) est d'un plus grand diamètre que celui du collet 32c, pour permettre aisément l'accrochage et le décrochage de l'écran 40.

Dans un mode de réalisation illustré à la figure 9 du dessin, les moyens pour ralentir le déploiement du manchon 31 consistent en une membrane déformable 42 mise en pression par l'air insufflé pour le déploiement du manchon 31. La membrane 42 est réalisée par exemple à partir d'une bande de film plastique par exemple en polyester dont les bords extrêmes sont rejoints et soudés pour donner à la membrane une forme tubulaire. Les bords longitudinaux 42a et 42b de cet élément tubulaire sont retournés sur les bords périphériques haut et bas 43a/43b d'un manchon cylindrique 43 d'un diamètre interne légèrement supérieur au diamètre externe du fourreau 33. L'ensemble manchon 43/membrane 42 est emmanché forcé autour de l'extrémité supérieure 33b du fourreau. La membrane 42, insérée entre le fourreau 33 et le manchon 43, est fixée de façon étanche à la jonction des parties 33b/43b de ces deux éléments.

La partie supérieure 43a du manchon comportant le bord retourné 42a de la membrane, est fermée partiellement par un couvercle cylindrique 44 d'un diamètre interne légèrement supérieur au diamètre externe du manchon 43, lequel couvercle est emboîté à la partie supérieure 43a du manchon 43 en insérant la membrane 42 qui est également fixée de façon étanche à cet endroit.

Le couvercle 44 comporte, à sa partie centrale, un évidement circulaire concentrique 44a d'un diamètre légèrement supérieur au diamètre extérieur du piston 32, de telle sorte que tel que cela est illustré à la figure 10, le piston 32, dans la position rétractée du manchon 31, obture le fourreau 33 à sa partie supérieure.

La membrane 42 ainsi montée sur le fourreau 33 forme une poche d'air annulaire 45. La déformation de la membrane est obtenue en introduisant dans ladite poche 45 de l'air mis en pression au moyen d'un ventilateur à basse pression ou tout autre dispositif similaire servant également au déploiement ou à la rétraction des manchons 31. L'air amené par le collecteur 37 est introduit dans la poche 45 par une tubulure 46, par exemple un tube en matière plastique souple emmanché autour d'un embout en T 47, soudé sur la tubulure 36 qui alimente le manchon 31 et autour d'un autre embout 48 d'un raccord engagé dans un orifice 43c réservé dans la paroi du manchon 43 et débouchant dans ladite poche. Une vanne 49, par exemple du type à tiroir, permet de régler le débit d'air dans la poche 45 pour moduler la déformation de la membrane 42 et obtenir, avec plus ou moins d'intensité, le freinage du manchon 31 lors de son déploiement.

Au moment du repliement des écrans 40 et donc de la rétraction du manchon 31, provoquée par la dépression créée dans le réseau d'air, la membrane 42, qui était au contact du manchon 31, s'efface et permet à celui-ci de se rétracter librement à l'intérieur du fourreau 33, jusqu'à ce que le piston 32 vienne obturer le fourreau au niveau du couvercle 44.

En variante, les moyens pour ralentir le déploiement du manchon 31 consistent en un élément tubulaire cylindrique 50 d'un diamètre externe sensiblement égal au diamètre interne du manchon 43 et d'un diamètre interne inférieur au diamètre externe du manchon 31 afin de venir en appui sur la périphérie de celui-ci. Ledit élément 50 est logé entre le bord supérieur 33b du fourreau 33 et le couvercle 44.

Dans un mode d'exécution, ledit élément 50 est réalisé en mousse synthétique, par exemple de la mousse de polyuréthane.

Dans un autre mode de réalisation, l'élément 50 est composé d'une pluralité de fibres souples implantées dans un support et s'étendant radialement de telle sorte que leurs extrémités libres délimitent un évidement cylindrique d'un diamètre légèrement inférieur au diamètre externe du manchon 31 pour être en contact étroit avec celui-ci et provoquer son freinage lors de son déploiement.

Comme cela est illustré à la figure 8, lorsque les écrans 40 sont repliés au pied des arceaux 4 et des cintres 1, les plantes 51 sont entièrement découvertes et reçoivent ainsi le rayonnement solaire, le repliement des écrans quasi total étant obtenu du fait que les fourreaux 33 sont partiellement enterrés. Les écrans sont, tel que représenté sur ladite figure, déployés ou rétractés au moyen de manchons s'étendant sur la longueur des arceaux 4 et pouvant être rétractés dans des fourreaux 33 situés à l'un des pieds des arceaux. Comme cela a été exposé plus haut, le piston 32 peut comporter des aimants permanents coopérant en fin de course avec des plaques en acier doux 52 pour maintenir les écrans 40 déployés.

Le mode de réalisation illustré à la figure 8 n'est pas limitatif ; en effet, comme cela a été précédemment décrit, les écrans peuvent être déployés pour être réunis au faîte de la serre ou en un lieu quelconque sur le pourtour des arceaux 4. Selon cette variante, un fourreau 33 est disposé à chacun des pieds des arceaux qui comportent les moyens pour déployer ou replier les écrans.

On se reporte maintenant à la figure 12 du dessin qui illustre un autre mode d'exécution du dispositif selon l'invention et comportant des moyens pour obtenir le déploiement correct du manchon 31.

Comme dans l'exemple décrit précédemment, le manchon 31 est disposé dans un fourreau cylindrique 53 et est fixé au fond 54 de celui-ci, lequel fond est monté de la façon décrite en référence à la figure 9. Le manchon 31 est fixé audit fond par une de ses extrémités 31a, au moyen d'un collier 55. Le fond 54 est percé en son centre selon un conduit cylindrique 54a, dans lequel est engagé un tube 56, lequel est relié à un circuit d'air comprenant un collecteur 57 et une tubulure 58.

Le tube 56 s'étend sensiblement coaxialement au fourreau 53 dont l'extrémité ouverte 53a est évasée pour former une embouchure tronconique. L'extrémité du tube 56 se situe sensiblement à la naissance de la partie évasée 53a et comporte un embout femelle 56a destiné à recevoir un arceau de guidage 4.

Le manchon 31 comporte à son autre extrémité 31b, un piston 59. Ce piston comporte une partie conique 59a, pour coopérer avec l'embouchure conique 53a du fourreau. Sa partie inférieure est prolongée par un rétreint cylindrique 59b autour duquel le manchon 31 est fixé au moyen d'un collier 60. Sa partie supérieure 59c adopte la forme d'un couvercle délimitant une gorge 59d dans laquelle s'engage le bord périphérique de l'embouchure conique 53a, lorsque le piston est ramené contre le fourreau, tel qu'illustré en traits mixtes sur le dessin, et que le manchon est emmagasiné dans ledit fourreau.

Le piston 59 comporte également, à sa partie supérieure, un collet 59e dans la gorge duquel est engagé un anneau 39 auquel est fixé l'écran 40 par l'intermédiaire d'une lanière souple 41 de la même manière, par exemple, que celle décrite en référence à la figure 9 du dessin.

Le piston 59 comporte, en son centre, un conduit cylindrique 59f le traversant de part en part, lequel conduit est d'un diamètre légèrement supérieur à celui de l'arceau 4 afin de pouvoir coulisser librement sur celui-ci.

Les moyens pour ralentir le déploiement du manchon 31 consistent en une poche 61, réalisée à partir d'une membrane déformable en matière plastique, par exemple en polyester, laquelle poche est d'un diamètre extérieur sensiblement égal au diamètre intérieur du manchon 31 replié.

Cette poche comporte deux cols 61a/61b disposés en opposition dans lesquels est passé le tube d'air 56. La fixation de la poche 61 au tube 56 est assurée de façon étanche au moyen de deux colliers 62/63. L'air admis dans la poche 61 pour provoquer sa déformation est injecté à travers un ou plusieurs orifices 64, ménagés dans la paroi du tube 56 et situés entre les deux cols 61a/61b.

Dans le but de contrôler le gonflage de la poche 61 et d'obtenir la pression juste nécessaire pour provoquer le déploiement correct de la chambre à air, la poche 61 comporte des fuites d'air 66, constituées par des orifices de petit diamètre, par exemple quatre orifices ayant un diamètre de 5 mm.

L'air mis en pression par un ventilateur à basse pression ou tout autre dispositif similaire est amené par le collecteur 57 et les tubulures 58/56 et est introduit dans la poche 61 par l'orifice 64 et dans le manchon 31 par l'orifice 65. La mise en pression de l'air dans la poche 61 provoque son expansion jusqu'à ce que sa paroi s'appuie sur la périphérie interne du manchon 31 et freine le déploiement dudit manchon lors du repliement des écrans 40 et donc de la rétraction du manchon 31, provoquée par la dépression créée dans le réseau d'air, la poche 61, qui était au contact de la face interne du manchon 31, s'efface à l'intérieur dudit manchon et permet à celle-ci de se rétracter librement à l'intérieur du fourreau 53 jusqu'à ce que le piston 59 obture le fourreau à sa partie supérieure.

La figure 13 illustre une variante du dispositif décrit en référence de la figure 12. Dans ce mode de réalisation, le gonflage de la poche 61 est obtenu par une valve 67, fixée à la partie inférieure de la poche 61 et reliée au collecteur d'air 57 par une tubulure 68 amenant l'air à la partie inférieure du fourreau et prolongée par une tuyauterie souple 69 aboutissant à la valve 67. Une vanne 70, par exemple du type à tiroir, montée sur la tubulure 68 permet de régler le débit d'air dans la poche 61 pour moduler sa déformation et obtenir avec plus ou moins d'intensité le freinage du manchon 31 lors de son déploiement.

L'effacement de la poche est obtenu en créant une dépression dans le circuit d'air une dépression dans le circuit d'air tel qu'exposé précédemment.

La figure 14 illustre une autre variante du dispositif décrit en référence à la figure 12. Selon cette variante, les moyens pour ralentir le déploiement du manchon 31 consistent en une poche en forme de manche 71, réalisée à partir d'une membrane déformable en matière plastique, par exemple en polyester, laquelle manche est d'un diamètre extérieur approximativement égal au diamètre interne du manchon 31 lorsque celui-ci est rétracté.

La manche 71 s'étend au centre de la chambre 31 : entre le fond du fourreau 53 et le piston 59, lorsque celui-ci obture le fourreau 53 à sa partie supérieure évasée 53a.

La manche 71 est fixée au fond du fourreau en étant emmanchée autour d'un rétreint cylindrique 54b, son maintien étant assuré par exemple par un collier 72.

Elle comporte à son autre extrémité située du côté de l'embouchure 53a du fourreau, un disque rigide 73 qui l'obture partiellement à cet endroit.

Le disque 73 est d'un diamètre externe inférieur au diamètre interne du manchon 31, et est percé en son centre 73a pour permettre le passage du tube d'air 56, et comporte un ou plusieurs orifices 73b, par exemple au nombre de deux, qui le traversent de part en part. Les orifices 73b sont d'un diamètre de l'ordre de 5 mm, et ont pour objet de permettre le passage de l'air lors de la mise en pression ou en dépression du manchon 31 pour provoquer son déploiement ou son repliement. L'air est admis dans la poche 71 ou aspiré de celle-ci par un ou plusieurs orifices 74, par exemple deux orifices ménagés dans la paroi du tube d'air 56. Ces orifices sont situés au voisinage du disque 73, par exemple à une distance de l'ordre de 2 à 4 cm. Cette disposition a pour objectif de permettre la mise en dépression de la manche 71 sans provoquer l'obturation des trous 74. En effet, lors de la mise en dépression de la manche 71, en vue de la rétraction du manchon 31, la manche est plaquée autour du tube 56, tel qu'illustré en traits mixtes sur la figure 14.

La rigidité du disque 73 et la position relative des orifices 74 par rapport à celui-ci empêchent l'obturation desdits orifices 74.

Lorsque le manchon 31 est totalement rétracté dans le fourreau 53, le piston 59 est en appui sur le disque rigide 73 de la manche 71 et obture les orifices pour le passage de l'air 73a.

Le disque rigide 73 de la poche 71 repose sur une butée circulaire 75, fixée au tube d'air central 56 et s'étendant dans un plan perpendiculaire audit tube.

## Revendications

1. Dispositif pour la mise en place et le retrait d'un ou plusieurs écrans thermiques dans une serre, lequel dispositif se compose de plusieurs arceaux (4), répartis à l'intérieur de la serre (1) et destinés à guider et à supporter au moins un écran (6/40), lequel est fixé du côté de la partie inférieure des arceaux (4) et est relié à des moyens de traction pour d'une part déployer et tendre l'écran (6/40) au-dessus des arceaux (4) et d'autre part obtenir son repliement au pied de ceux-ci, caractérisé en ce qu'il comporte des manchons coulissants extensibles ($15/15_2/15_3/23/30/31$) entourant lesdits arceaux (4) dont les manchons ($15/15_2/15_3$) sont des chambres à air fixées au pied des arceaux (4) et comportant, à leur extrémité libre, un piston (17) percé en son centre pour coulisser sur lesdits arceaux (4) auxquels pistons est fixé le bord longitudinal libre (6d) de l'écran (6) ; en ce que les pistons comportent en outre des moyens d'accrochage (18) pour maintenir en fin de course l'écran déployé et sont soumis à des moyens pour ramener l'écran (6) en position repliée et en ce qu'il comporte en outre des moyens pour souffler de l'air dans lesdites chambres.

2. Dispositif selon la revendication 1, caractérisé en ce que les manchons ($15/15_2$) sont fixés sur des cols s'étendant orthogonalement à la périphérie des collecteurs d'air (16), disposés au pied des arceaux (4) pour insuffler l'air dans lesdits manchons ($15/15_2$) et provoquer le déplacement des pistons (17) et le déploiement de l'écran 6.

3. Dispositif selon l'une quelconque des revendications 1 et 2, caractérisé en ce que les manchons (15) sont perforés à leur extrémité située du côté du piston (17) pour créer des fuites d'air et établir une circulation d'air frais dans le volume délimité par l'écran (6) et former un coussin d'air pour porter l'écran (6) par soufflage.

4. Dispositif selon l'une quelconque des revendications 1 à 3, caractérisé en ce que les manchons ($15/15_3$) comportent une armature ($15b/29$), laquelle est disposée à l'intérieur desdits manchons ($15/15_3$).

5. Dispositif selon l'une quelconque des revendications 1 à 3, caractérisé en ce que les manchons ($15/15_3$) comportent une armature métallique ($15b/29$), laquelle est solidaire de la paroi desdits manchons ($15/15_3$).

6. Dispositif selon l'une quelconque des revendications 1 à 3, caractérisé en ce que les manchons ($15_2/30$) comportent des soufflets.

7. Dispositif selon la revendication 5, caractérisé en ce qu'il comporte, autour de certains arcaux (4), deux manchons ($15_3/30-23$) dont l'un ($15_3/30$) de plus petite section est engagé dans l'autre (23) de plus forte section, lesquels manchons ($15_3/30-23$) sont d'une part fixés au pied des arceaux (23) et d'autre part au piston (27) auquel est attaché l'écran (6).

8. Dispositif selon la revendication 7, caractérisé en ce que le manchon de plus forte section (23) comporte des perforations (23a) situées du côté du piston (27) pour créer des fuites d'air et établir une circulation d'air frais dans le volume délimité par l'écran (6) et pour former un coussin d'air pour porter l'écran (6) par soufflage.

9. Dispositif selon l'une quelconque des revendications 4 à 7, caractérisé en ce que le repliement des écrans (6) dans la serre est obtenu en créant une dépression dans les manchons à soufflets ($15_2/30$) ou qui comportent une armature ($15/15_3$).

10. Dispositif selon l'une quelconque des revendications 1 à 9, caractérisé en ce qu'il comporte dans le voisinage et au-dessous du piston (32) de plusieurs manchons (31) en position rétractée, des moyens (42/50/61/71) portés par une structure (33/53) et mis au contact de la périphérie interne ou externe du manchon (31) et dont la fonction est de ralentir le déploiement du manchon lors de sa mise en pression afin d'assurer une bonne répartition de l'air dans la partie du manchon gonflé et éviter que cette partie ne s'enroule autour de l'arceau de guidage (4) pendant le déploiement de l'écran (40).

11. Dispositif selon la revendication 10, caractérisé en ce que les moyens pour ralentir le déploiement du manchon consistent en une membrane déformable (42) formant une poche annulaire qui entoure le manchon (31), laquelle poche est reliée à un circuit d'air (36/37) pour être mise en pression et provoquer la déformation de la membrane (42) du côté de la périphérie externe du manchon (31) et exercer sur celui-ci une pression périphérique ou être mise en dépression et s'effacer lors de la rétraction du manchon (31).

12. Dispositif selon l'une quelconque des revendications 10 et 11, caractérisé en ce qu'il comporte, à au moins un des pieds de plusieurs arceaux de guidage (4), un fourreau (33/53) qui entoure l'arceau (4) et au fond duquel est fixé, par une de ses extrémités, le manchon (31), lequel fourreau (33/53) enveloppe le manchon (31), complètement rétracté, et comporte, au voisinage de son extrémité ouverte (33b/53a) un desdits moyens pour ralentir le déploiement du manchon (31).

13. Dispositif selon la revendication 12, dont le fourreau (33/53) est cylindrique, caractérisé en ce que l'arceau de guidage (4) s'étend sensiblement coaxialement au fourreau (33/53) et en ce qu'en position complètement rétractée du manchon (31), le piston (32/59) obture le fourreau (33/53) à son extrémité supérieure.

14. Dispositif selon l'une quelconque des revendications 12 et 13, caractérisé en ce que lesdits moyens pour ralentir le déploiement du manchon (31) sont fixés à proximité du piston (32/59) du manchon complètement rétracté.

15. Dispositif selon l'une quelconque des revendications 12 à 14, caractérisé en ce que chacun des fourreaux (33/53) est relié par une tubulure (36/58) à un collecteur d'air, laquelle tubulure débouche dans la partie inférieure (33a/54) du fourreau pour alimenter les manchons (31).

16. Dispositif selon l'une quelconque des revendications 10 à 15, caractérisé en ce que lesdits fourreaux (33/53) sont totalement ou partiellement enterrés dans le sol de la serre pour éviter, qu'en position repliée, les écrans (40) ne produisent de l'ombre sur les cultures situées en bordure des arceaux de guidage (4).

17. Dispositif selon la revendication 10, caractérisé en ce que les moyens pour ralentir le déploiement du manchon (31) consistent en une membrane déformable formant une poche (61) fixée à l'intérieur et dans la partie centrale du manchon (31), laquelle poche est reliée au circuit d'air du dispositif pour être gonflée et être mise en appui sur la périphérie interne du manchon (31) et exercer une pression sur celui-ci, ou pour être mis en dépression et s'effacer lors de la rétraction du manchon (31).

18. Dispositif selon la revendication 17, caractérisé en ce que la poche (61) entoure un tube d'amenée d'air (56), disposé sensiblement coaxialement au manchon (31), lequel tube comporte au moins un orifice (64) débouchant dans la poche (61) pour la mettre en pression ou en dépression.

19. Dispositif selon la revendication 17, caractérisé en ce que la poche (61) est alimentée en air par une tubulure reliée au circuit d'air et aboutissant à une valve (67) fixée à la poche (61).

20. Dispositif selon l'une quelconque des revendications 17 à 19, caractérisé en ce que la poche (61) comporte des orifices (66) situés du côté du piston (59) pour créer des fuites d'air dans la partie de la chambre (31), comprise entre la poche (61) et le piston (59) pour provoquer le déploiement ou la rétraction du manchon (31).

21. Dispositif selon la revendication 10, caractérisé en ce que les moyens pour ralentir le déploiement du manchon (31) adoptent la forme d'une manche (71), laquelle est fixée, par son extrémité inférieure, au fond (54) du fourreau (53), laquelle manche (71) comporte, à son autre extrémité, un disque rigide (73), percé en son centre (73a), pour être traversé par le tube d'air (56) et comportant au moins un autre orifice (73b) pour le passage de l'air, sur lequel disque (73) le piston (59) s'appuie lorsque le manchon (31) est complètement rétracté, de telle sorte que le piston (59) obture ledit orifice (73b) et en ce que l'orifice (74), réservé dans la paroi du tube d'air (56) pour alimenter la manche (71) du manchon (31) ou pour les mettre en dépression, est situé au voisinage du disque rigide (73).

## Claims

1. Device for positioning and removing one or more thermal screens inside a green house, said device being composed of a plurality of bows (4) distributed inside the greenhouse (1), and designed to guide and support at least one screen (6/40), which is fixed close to the lower part of the bows (4) and is connected to stretching means for, on the one hand spreading out and stretching the screen (6/40) above the bows (4), and on the other hand, for folding it back at the feet of said bows, characterized in that it comprises extensible sliding sleeves (15/15₂/15₃/23/30/31) surrounding said bows (4) the sleeves of which(15/15₂/15₃) are air chambers fixed at the feet of the bows (4) and comprising at their free end, a piston (17) perforated in its center for sliding on said bows (4) to which piston is fixed the free longitudinal edge (6d) of the screen (6) ; in that the pistons further comprise anchoring means (18) for keeping the screen in the spread out state and are subjected to means for returning the screen (6) back in folded up position, and in that it further comprises means for blowing air into said chambers.

2. Device according to claim 1, characterized in that the sleeves (15/15₂) are fixed on necks extending orthogonally to the periphery of the air collectors (16), placed at the feet of the bows (4) to blow air into said sleeves (15/15₂) and to cause the pistons (17) to move and the screen (6) to spread.

3. Device according to any one of claims 1 and 2, characterized in that the sleeves (15) are perforated at their end situated on the piston (17) side for creating air leaks and setting up a circulation of fresh air inside the volume defined by the screen (6) and forming an air cushion supporting the screen (6) by blowing.

4. Device according to any one of claims 1 to 3, characterized in that the sleeves (15/15₂) comprise a reinforcement (15b/29) which is placed inside said sleeves (15/15₃).

5. Device according to any one of claims 1 to 3, characterized in that the sleeves (15/15₃) comprise a metallic reinforcement (15b/29) which is integral with the wall of said sleeves (15/15₃).

6. Device according to any one of claims 1 to 3, characterized in that the sleeves (15₂/30) comprise bellows.

7. Device according to claim 5, characterized in that it comprises around certain bows (4), two sleeves (15₃/30-23) one of which (15₃/30) of smaller section is engaged into the other (23) of larger section, said sleeves (15₃/30-23) being on the one hand fixed to the feet of the bows (23) and on the other hand to the piston (27) to which is anchored the screen (6).

8. Device according to claim 7, characterized in that the sleeve of larger section (23) comprises perforations (23a) situated on the piston (27) side for creating air leaks and setting up a circulation of fresh air inside the volume defined by the screen (6) anf forming an air cushion supporting the screen by blowing.

9. Device according to any one of claims 4 to 7, characterized in that the screens (6) in the green house are folded back by creating a depression inside the bellowed sleeves (15₂/30) or in the sleeves with reinforcement (15/15₃).

10. Device according to any one of claims 1 to 9, characterized in that it comprises close to and under the piston (32) a plurality of sleeves (31) in retracted position, means (42/50/61/71) carried by a structure (33/53) and brought in contact with the internal or external periphery of the sleeve (31) and whose function is to slow up the spreading of the sleeve when it is pressurized in order to provide for a good distribution of the air in the part of the inflated sleeve and to prevent this part from coiling around the guiding bow (4) during the screen (40) spreading.

11. Device according to claim 10, characterized in that the means for slowing up the spreading of the sleeve consist in a deformable diaphragm (42) forming an annular pocket around the sleeve (31), said pocket being connected to an air circuit (36/37) to be pressurized and to cause the deformation of the diaphragm (42) on the side of the external periphery of the sleeve (31) and to exert thereupon a peripheral pressure, or to be depressurized and withdraw when the sleeve (31) retracts.

12. Device according to any one of claims 10 and 11, it comprises at least at one of the feet of several guiding bows (4), a sheath (33/53) surrounding the bow (4) and at the bottom of which is fixed by one of its ends the sleeve (31), said sheath (33/53) covering the entirely retracted sleeve (31) and comprising close to its open ends (33b/53a) one of said means for slowing up the sleeve (31) spreading.

13. Device according to claim 12, of which the sheath (33/53) is cylindrical, characterized in that the guiding bow(4) extends substantially coaxially to the sheath (33/53), and in that in fully retracted position of the sleeve (31), the piston (32/59) closes the sheath at its upper end.

14. Device according to any one of claims 12 and 13, characterized in that said means for slowing up the spreading of the sleeve (31) are fixed close to the piston (32/59) of the fully retracted sleeve.

15. Device according to any one of claims 12 to 14, characterized in that each of the sheaths (33/53) is connected by a pipe (36/58) to an air collector, which pipe issues into the lower part (33a/54) of the sheath for supplying the sleeves (31).

16. Device according to any one of claims 10 to 15, characterized in that said sheaths (33/53) are entirely or partially embedded in the ground of the greenhouse in order to prevent the screens (40) in folded position, from producing shade on the cultures situated at the edge of the guiding bows (4).

17. Device according to claim 10, characterized in that the means for slowing up the sleeve (31) spreading consist in a deformable diaphragm forming a pocket (61) fixed inside and in the center of the sleeve (31), said pocket being connected to the air circuit of the device to be inflated and to rest on the internal periphery of the sleeve (31) and exert a pressure thereupon, or to be depressurized and withdraw during retraction of the sleeve.

18. Device according to claim 17, characterized in that the pocket (61) surrounds an air supply tube (56), placed substantially coaxially to the sleeve, said tube comprising at least one orifice (64) issuing into the pocket to pressurize or depressurize said pocket.

19. Device according to claim 17, characterized in that the pocket (61) is supplied with air via a pipe connected to the air circuit and issuing into a valve (67) fixed to the pocket (61).

20. Device according to any one of claims 17 to 19, characterized in that the pocket (61) comprises orifices (66) situated on the side of the piston (59) to create air leaks in the part of the chamber (31) comprised between the pocket (61) and the piston (59) to cause the spreading or retraction of the sleeve (31).

21. Device according to claim 10, characterized in that the means for slowing up the spreading of the sleeve (31) take on the shape of an air sleeve (71) which is fixed, by its lower end, to the bottom (54) of the sheath (53), said air sleeve (71) comprising at its other end, a rigid disk (73) perforated in its center (73a) to allow through the tube (56) of air and comprising at least another orifice (73b) for the passage of air, on which disk (73) rests the piston (59) when the sleeve (31) is completely retracted, so that the piston (59) closes said orifice (73b) and in that the orifice (74) made in the wall of the air tube (56) supplying the air sleeve (71) of the sleeve (31) or for depressurizing them, is situated close to the rigid disk (73).

**Patentansprüche**

1. Vorrichtung zum Ausziehen und Einziehen eines oder mehrere Wärmeschilde in einem Gewächshaus, welche Vorrichtung aus mehreren im Inneren des Gewächshauses (1) verteilten Bögen (4) zum Führen und Tragen mindestens eines Schilds (6/40) besteht, welcher auf der Seite des Unterteils der Bögen (4) befestigt und mit Zugmitteln einerseits zum Entfalten und Spannen des Schilds (6/40) über die Bögen (4) und anderseits zum Zusammenfalten desselben am Fuß der Bögen verbunden ist, dadurch gekennzeichnet, daß sie die Bögen (4) umgebende, ausziehbare Schiebehülsen (15/15₂/15₃/23/30/31) umfaßt, wobei die Hülsen (15/15₂/15₃) am Fuß der Bögen (4) befestigte Luftkammern sind, die an ihrem freien Ende einen zum Gleiten an den Bögen (4) in der Mitte durchbohrten Kolben (17) aufweisen, an welchen Kolben der freie Längsrand (6d) des Schilds (6) befestigt ist, daß die Kolben weiters Halterungsmittel (18) zum Halten des Schilds in entfalteter Stellung am Ende des Hubs umfassen und Mitteln zum Zurückbringen des Schilds (6) in zusammengefaltete Stellung unterworfen sind, und daß sie weiters Mittel zum Einblasen von Luft in die Kammern umfaßt.

2. Vorrichtung nach Anspruch 1, dadurch gekennzeichnet, daß die Hülsen (15/15₂) an senkrecht zum Umfang von Luftkollektoren (16) verlaufenden Hälsen befestigt sind, welche Luftkollektoren am Fuß der Bögen (4) zum Einblasen von Luft in die Hülsen (15/15₂) und zum Bewirken der Verschiebebewegung der Kolben (17) sowie des Entfaltens des Schilds (6) angeordnet sind.

3. Vorrichtung nach einem der Ansprüche 1 und 2, dadurch gekennzeichnet, daß die Hülsen (15) an dem auf der Seite des Kolbens (17) befindlichen Ende zum Entweichen von Luft und zur Schaffung einer Zirkulation von Frischluft in dem vom Schild (6) begrenzten Raum sowie zur Bildung eines den Schild (6) tragenden Luftpolsters durch Blasen perforiert sind.

4. Vorrichtung nach einem der Ansprüche 1 bis 3, dadurch gekennzeichnet, daß die Hülsen (15/15₃) eine im Inneren der Hülsen (15/15₃) angeordnete Armierung (15b/29) aufweisen.

5. Vorrichtung nach einem der Ansprüche 1 bis 3, dadurch gekennzeichnet, daß die Hülsen (15/15₃) eine mit der Wand der Hülsen (15/15₃) verbundene Metallarmierung (15b/29) umfassen.

6. Vorrichtung nach einem der Ansprüche 1 bis 3, dadurch gekennzeichnet, daß die Hülsen (15₂/30) Gebläse aufweisen.

7. Vorrichtung nach Anspruch 5, dadurch gekennzeichnet, daß sie um gewisse Bögen (4) zwei Hülsen (15₃/30-23) aufweist, von denen die Hülsen (15₃/30) mit geringerem Querschnitt in die andere (23) mit größerem Querschnitt eingeschoben ist, welche Hülsen (15₃/30-23) einerseits am Fuß der Bögen (23) und anderseits an dem Kolben (27), an dem der Schild (6) angebracht ist, befestigt sind.

8. Vorrichtung nach Anspruch 7, dadurch gekennzeichnet, daß die Hülse (23) mit größerem Querschnitt auf der Seite des Kolbens (27) Perforationen (23a) zum Entweichen von Luft und zur Schaffung einer Frischluftzirkulation in dem vom Schild (6) begrenzten Raum sowie zur Bildung eines den Schild (6) tragenden Luftpolsters durch Blasen umfaßt.

9. Vorrichtung nach einem der Ansprüche 4 bis 7, dadurch gekennzeichnet, daß das Zusammenfalten der Schilde (6) in Gewächshaus durch Schaffung eines Unterdrucks in den Hülsen (15₃/30) mit Gebläse oder in den Hülsen (15/15₃) mit Armierung bewirkt wird.

10. Vorrichtung nach einem der Ansprüche 1 bis 9, dadurch gekennzeichnet, dadurch gekennzeichnet, daß sie in Nähe des Kolbens (32) und unter diesem von mehreren Hülsen (31) in eingezogener Stellung Mittel (42/50/61/71) umfaßt, die von einem Gerüst (33/53) getragen sind und sich mit dem inneren oder äußeren Umfang der Hülse (31) in Kontakt befinden, deren Funktion es ist, das Entfalten der Hülse bei Beaufschlagung derselben zur Gewährleistung einer guten Verteilung der Luft im Luftgefüllten Teil der Hülse und zur Vermeidung eines Einrollens dieses Teils um den Führungsbogen (4) während des Entfaltens des Schilds (40) abzubremsen.

11. Vorrrichtung nach Anspruch 10, dadurch gekennzeichnet, daß die Mittel zum Abbremsen des Entfaltens des Schilds aus einer verformbaren Membran (42) bestehen, die eine die Hülse (31) umgebende ringförmige Tasche bildet, welche zum unter Drucksetzen und dadurch Verformen der Membran (42) auf der Seite des äußeren Umfangs der Hülse (31) und Ausüben eines peripheren Drucks auf dieselbe oder für Unterdruck und Zurückgehen bei Einziehen der Hülse (31) mit einem Luftkreis (36/37) verbunden ist.

12. Vorrichtung nach einem der Ansprüche 10 und 11, dadurch gekennzeichnet, daß sie an zumindest einem Fuß mehrerer Führungsbögen (4) eine den Bogen (4) umgebende Büchse (33/53) aufweist, an deren Boden die Hülse (31) mit einem ihrer Enden befestigt ist und welche Büchse (33/53) die vollkommen eingezogene Hülse (31) umhüllt und in der Nähe ihres offenen Endes (33b/53a) eines der Mittel zum Abbremsen des Entfaltens der Hülse (31) umfaßt.

13. Vorrichtung nach Anspruch 12, bei welcher die Büchse (33/53) zylinderförmig ist, dadurch gekennzeichnet, daß sich der Führungsbogen (4) im wesentlichen koaxial zur Büchse (33/53) erstreckt, und daß der Kolben (32/59) bei vollkommen eingezogener Stellung der Hülse (31) die Büchse (33/53) an ihrem oberen Ende verschließt.

14. Vorrichtung nach einem der Ansprüche 12 und 13, dadurch gekennzeichnet, daß die Mittel zum Abbremsen des Entfaltens der Hülse (31) nahe dem Kolben (32/59) der vollkommen eingezogenen Hülse befestigt sind.

15. Vorrichtung nach einem der Ansprüche 12 bis 14, dadurch gekennzeichnet, daß jede der Büchsen (33/53) über ein Rohr (36/58) mit einem Luftkollektor verbunden ist, welches Rohr zum Speisen der Hülsen (31) im unteren Teil (33a/54) der Büchse mündet.

16. Vorrichtung nach einem der Ansprüche 10 bis 15, dadurch gekennzeichnet, daß die Büchsen (33/53) vollkommen oder teilweise im Boden des Gewächshauses verlegt sind, um zu vermeiden, daß die Schilde (40) in zusammengefalteter Stellung Schatten auf die um die Führungsbögen (4) herum angeordneten Kulturen werfen.

17. Vorrichtung nach Anspruch 10, dadurch gekennzeichnet, daß die Mittel zum Abbremsen des Entfaltens der Hülse (31) aus einer im Inneren und im Mittelteil der Hülse (31) befestigten, eine Tasche (61) bildenden, verformbaren Membran bestehen, welche Tasche zwecks Aufblasens und Abstützens auf dem Innenrand der Hülse (31) und Ausüben eines Drucks auf dieselbe oder für Unterdruck und Zurückgehen bei Einziehen der Hülse (31) mit dem Luftkreis der Vorrichtung verbunden ist.

18. Vorrichtung nach Anspruch 17, dadurch gekennzeichnet, daß die Tasche (61) ein Luftzufuhrrohr (56) umgibt, welches im wesentlichen koaxial zur Hülse (31) angeordnet ist und mindestens eine Öffnung (64) umfaßt, die in die Tasche (61) mündet, um diese unter Druck zu setzen bzw. einen Unterdruck herzustellen.

19. Vorrichtung nach Anspruch 17, dadurch gekennzeichnet, daß die Tasche (61) über ein mit dem Luftkreis verbundenes und in einem an der Tasche (61) befestigten Ventil (67) endendes Rohr mit Luft gespeist ist.

20. Vorrichtung nach einem der Ansprüche 17 bis 19, dadurch gekennzeichnet, daß die Tasche (61) auf der Seite des Kolbens (59) befindliche öffnungen (66) zum Entweichen von Luft in dem zwischen der Tasche (61) und dem Kolben (59) befindlichen Teil der Kammer (31) zwecks Entfaltens oder Einziehens der Hülse (31) aufweist.

21. Vorrichtung nach Anspruch 10, dadurch gekennzeichnet, daß die Mittel zum Abbremsen des Entfaltens der Hülse (31) die Form einer Haube (71) annehmen, welche mit ihrem unteren Ende am Boden (54) der Büchse (53) befestigt ist und an ihrem anderen Ende eine starre Scheibe (73) umfaßt, die in ihrer Mitte (73a) für den Durchtritt des Luftrohrs (56) durchbohrt ist und mindestens eine weitere Öffnung (73b) für den Durchtritt von Luft aufweist, auf welcher Scheibe (73) sich der Kolben (59) abstützt, wenn die Hülse (31) vollkommen eingezogen ist, sodaß der Kolben (59) die Öffnung (73b) verschließt, und daß sich die öffnung (74), die in der Wand des Luftrohrs (56) zum Speisen der Haube (71) der Hülse (31) oder zum Herstellen eines Unterdrucks in diesen vorgesehen ist, nahe der starren Schale (73) befindet.

Fig. 1

0 082 795

Fig 2

0 082 795

Fig. 3

0 082 795

Fig. 4

0 082 795

Fig.5   Fig.6   Fig.7

Fig. 8

Fig. 9

Fig. 10

Fig. 11

Fig 12

Fig 13

8

Fig. 14